(19) Europäisches Patentamt / European Patent Office / Office européen des brevets

(11) **EP 1 629 495 B1**

(12) **EUROPEAN PATENT SPECIFICATION**

(45) Date of publication and mention
of the grant of the patent:
**11.04.2007 Bulletin 2007/15**

(21) Application number: **04732359.7**

(22) Date of filing: **12.05.2004**

(51) Int Cl.:
*G11B 20/22* (2006.01)   *G11B 20/12* (2006.01)
*G11B 7/095* (2006.01)

(86) International application number:
**PCT/IB2004/001646**

(87) International publication number:
**WO 2004/105029 (02.12.2004 Gazette 2004/49)**

(54) **DEVICE AND METHOD OF COMPENSATING THE DISTORTIONS IN OPTICAL DATA CARRIER SCANNING**

SYSTEM UND VERFAHREN ZUR KOMPENSATION VON STÖRUNGEN BEIM ABTASTEN OPTISCHER DATENTRÄGER

DISPOSITIF ET PROCEDE POUR COMPENSER DES DISTORSIONS LORS DE L'EXPLORATION D'UN SUPPORT DE DONNEES OPTIQUES

(84) Designated Contracting States:
**AT BE BG CH CY CZ DE DK EE ES FI FR GB GR HU IE IT LI LU MC NL PL PT RO SE SI SK TR**

(30) Priority: **21.05.2003 EP 03300018**

(43) Date of publication of application:
**01.03.2006 Bulletin 2006/09**

(73) Proprietor: **Koninklijke Philips Electronics N.V.
5621 BA Eindhoven (NL)**

(72) Inventors:
• **PADIY, Alexander
F-75008 Paris (FR)**
• **LEE, Juil
F-75008 Paris (FR)**

(74) Representative: **van Oudheusden-Perset, Laure E. et al
Société Civile SPID
156, Boulevard Haussmann
75008 Paris (FR)**

(56) References cited:
**EP-A- 1 006 527        EP-A- 1 098 313
US-A- 5 719 847        US-A- 6 167 008
US-A1- 2002 159 350**

**Description**

**FIELD OF THE INVENTION**

The invention relates to a method of compensating the distortions of an optical data carrier.

The present invention is applicable in the field of optical or magneto-optical disc systems.

**BACKGROUND OF THE INVENTION**

Disc drive systems are designed for storing information onto a disc-shaped storage medium or reading information from such a disc-shaped storage medium. In such systems, the disc is rotated and a write/read head is moved radially with respect to the rotating disc.

An optical storage disc comprises at least one track, either in the form of a continuous spiral or in the form of multiple concentric circles, of storage space where information may be stored. Optical discs may be of the read-only type, where information is recorded during manufacture, which data can only be read by a user. The optical storage disc may also be of a writable type, where information may be stored by a user.

For writing information in the storage space of the optical storage disc, or for reading information from the disc, an optical disc drive comprises, on the one hand, rotating means for receiving and rotating an optical disc, and on the other hand optical means for generating an optical beam, typically a laser beam, and for scanning the storage track with said laser beam. Since the technology of optical discs in general, the way in which information can be stored in an optical disc, and the way in which optical data can be read from an optical disc, are commonly known, it is not necessary here to describe this technology in more detail.

For rotating the optical disc, an optical disc drive typically comprises a motor, which drives a hub engaging a central portion of the optical disc. Usually, the motor is implemented as a spindle motor, and the motor-driven hub may be arranged directly on the spindle of the motor.

For optically scanning the rotating disc, an optical disc drive comprises a light beam generator device (typically a laser diode), an objective lens for focusing the light beam in a focal spot on the disc, and an optical detector for receiving the reflected light reflected from the disc and for generating an electrical detector output signal.

During operation, the light beam should theoretically remain focussed on the disc. To this end, the objective lens is arranged so as to be axially displaceable, and the optical disc drive comprises focal actuator means for controlling the axial position of the objective lens. Furthermore, the focal spot should remain aligned with a track or should be capable of being positioned with respect to a new track. To this end, at least the objective lens is mounted with radial displaceability, and the optical disc drive comprises radial actuator means for controlling the radial position of the objective lens.

In practice, defocusing of the lens leads to a symmetrically deformed (wider) spot on the optical disc, and as a consequence the spot resolution is decreased. Defocus corresponds to the wave aberration of the form $W20*R^2$ in the pupil lens plane. The W20 coefficient is zero in the case of defocus.

More particularly, the optical disc drive comprises a sledge which is displaceably guided with respect to a disc drive frame, which frame also carries the spindle motor for rotating the disc. The travel course of the sledge is arranged substantially radially with respect to the disc, and the sledge can be displaced over a range substantially corresponding to the range from the inner track radius to the outer track radius. Said radial actuator means comprise a controllable sledge drive, for instance comprising a linear motor, a stepper motor, or a worm gear motor.

The displacement of the sledge is intended for roughly positioning the optical lens. For fine-tuning the position of the optical lens, the optical disc drive comprises a lens platform which carries the objective lens and which is displaceably mounted with respect to said sledge. The displacement range of the platform with respect to the sledge is relatively small, but the positioning accuracy of the platform with respect to the sledge is higher than the positioning accuracy of the sledge with respect to the frame.

In many disc drives, the orientation of the objective lens is fixed, i.e. its axis is directed parallel to the rotation axis of the disc. In some disc drives, the objective lens is pivotably mounted, such that its axis can enclose an angle with the rotation axis of the disc. Usually, this is implemented by making the platform pivotable with respect to the sledge.

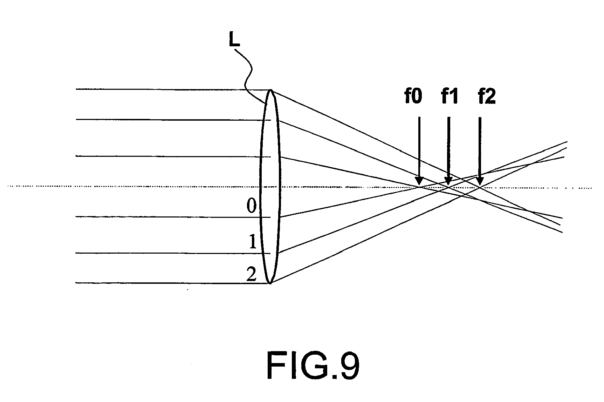

The optical system may also suffer from spherical aberration. Such an aberration corresponds to the wave aberration of the form $W40*R^4$ in the pupil lens plane. It normally arises in the optical disc systems when the disc cover thickness deviates from the nominal value, the objective lens being designed (i.e. corrected) for a particular cover layer thickness. Fig.9 illustrates spherical aberration and shows the cross-section of a rotationally symmetrical lens L. An incident and parallel beam is focused by the lens. For simplicity only a limited number of rays are shown. In the ideal case, all the incident rays are focussed in the same point. In the situation shown, however, the position at which the rays are focused is linked to the position where the incident ray hits the lens :

- a ray close to the optical axis (ray "0") is focused in f0,
- a ray which is a little bit further away from the optical axis (ray "1") is focused in f1,
- a ray at the rim of the lens (ray "2") is focused in f2.

This is called spherical aberration. Spherical aberration may be caused by the use of lenses that have a spherical surface. In that case, this aberration is usually solved by using an aspherical surface. Spherical aberration may also be caused by a (transparent) parallel plate placed in the focused beam, for example in optical storage applications when the cover-layer thickness of the disc deviates from its nominal value.

It is a general desire to increase the storage capacity of a record medium. One way of fulfilling this desire is to increase the storage density. To this end, optical scanning systems have been developed wherein the objective lens has a relatively high numerical aperture (NA). One problem involved in such optical systems is the increased sensitivity to tilt of the optical disc. Tilt of the optical disc can be defined as a situation where the storage layer of the optical disc, at the location of the focal spot, is not exactly perpendicular to the optical axis. Tilt may be caused by the optical disc being tilted as a whole, but is usually caused by the optical disc being warped, and as a consequence the amount of tilt depends on the location on the disc.

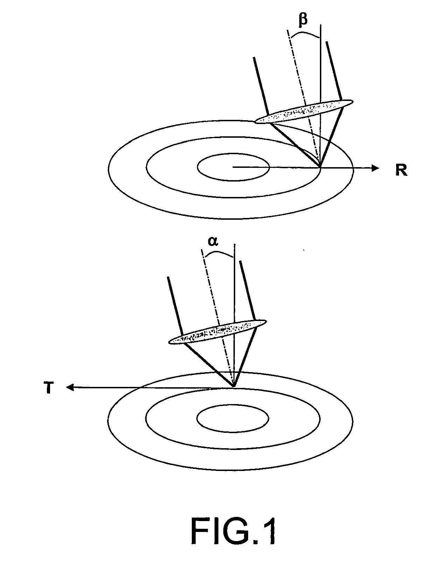

As is depicted in Fig.1, the tilt can have a radial component and a tangential component. The radial component (radial tilt) is the component $\beta$ of the deviation in a plane oriented transversely to the track to be read (i.e. along the radial direction R) and transversely to the data carrier, while the tangential component (tangential tilt) is defined as the component $\alpha$ of the deviation in a plane oriented parallel to the track (i.e. along the tangential direction T) to be read and transversely to the data carrier.

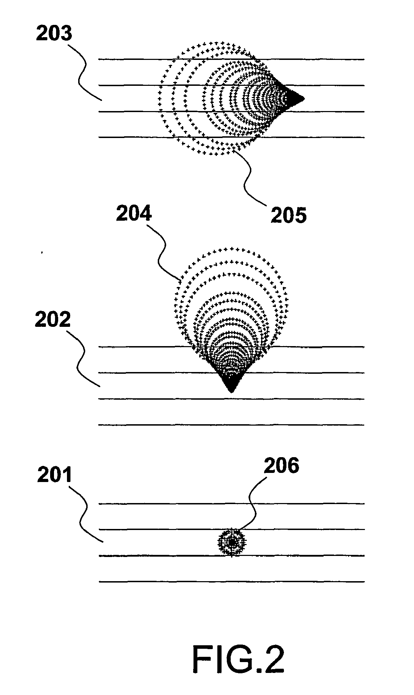

Fig.2 illustrates the laser beam for an optical disc having no tilt and for optical discs having a radial and a tangential tilt. If the disc is not tilted, the optical beam 206 remains focused on the track 201. If the disc has a radial or tangential tilt which leads to comatic aberration, the optical beam is no longer focused on the tracks 202 and 203 but has a tail 204 and 205, respectively.

As a consequence, it is necessary to detect and correct the disc tilt in an optical disk system, which uses a short wavelength laser diode and a high numerical aperture objective lens, because the resulting comatic aberration deteriorates the read and write performance, and the tilt margin becomes narrower.

The tangential tilt of an optical disc can be compensated by known optical/mechanical solutions, such as by a method using a three-dimensional actuator for the tangential tilt compensation, from a tangential tilt signal delivered by a tilt sensor.

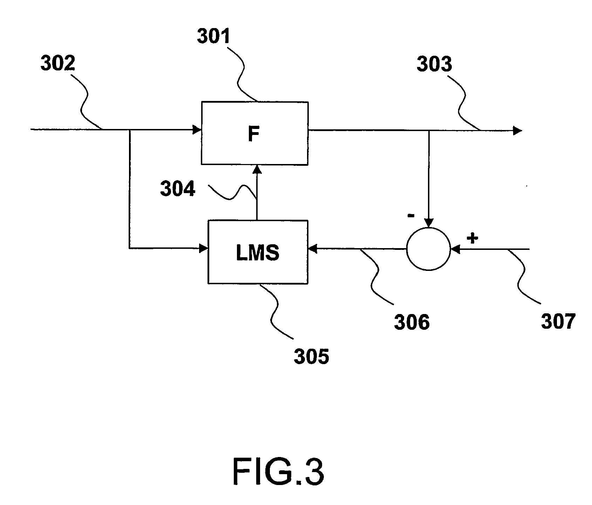

A known signal-processing-based solution for tangential tilt compensation is depicted in Fig.3. This method comprises a filtering step using a filter 301 applied to a readout signal 302 derived from a data signal stored on an optical disc. The bit-synchronous data samples of the readout signal are equalized by the filter 301, which allows to generate an output data signal 303 in which the effects of the optical disc tangential tilt are attenuated. The coefficients 304 of the filter used in the filtering step are determined by an adaptation step 305 based on a least mean-squares (LMS) algorithm. Coefficients are determined so as to minimize the quadratic error signal 306, said error signal being derived from a subtraction between an optimal output data signal 307 and the output data signal 303.

Although the LMS algorithm is widely used in many fields of application because of its simplicity, it has several disadvantages.

First, such an algorithm has a startup problem because the reference signal 307 is of poor quality when the system is not optimally adapted yet. The adaptive system may then get stuck at a totally wrong solution if initial coefficient settings are too far off from the correct one.

Secondly, such an algorithm may be quite slow in converging the filter coefficients to their optimal values especially if the filter has a large number of coefficients. The effects of the tilt are thus not completely compensated in the output data signal.

Finally, the filter coefficients tend to become ill-defined, and their convergence properties degrade if the system has more coefficients than strictly needed, especially when the readout data signal is not spectrally rich, i.e. if the readout signals do not have frequential components in the overall frequential spectrum.

Document EP 1006527 describes decoding for an optical disc system. A waveform equalizer equalizes the read-out signal. In a first step the read-out signal passes a gain controlled amplifier and in a second step a waveform equalizer. An operating circuit generates an equalizing error from an output signal and a waveform equalizing target. A coefficient generator adapts the equalizer based on the equalizing error.

Document US 2002/0159350 describes an optical disk reproduction device, which performs waveform equalization, automatic gain control, transversal filtering and high-order interpolation filtering. The transversal filtering and high-order interpolation filtering are controlled in dependence of the output signal.

## OBJECT AND SUMMARY OF THE INVENTION

It is an object of the invention to propose a new class of schemes for simultaneously compensating readout channel distortions in optical storage systems such as, for example, defocus, spherical aberrations, and optical data carrier tangential tilt.

However, the invention is not restricted to such optical aberrations and may also be applied for compensating all types of symmetrical channel distortions in the tangential direction along the track (i.e. amplitude-only in the frequency domain). In particular, the invention may also be applied to the compensation of the radial tilt, since this disturbance of the channel response not only introduces additional cross-talk from the neighboring tracks, but also changes the spot profile in the tangential direction in a symmetrical fashion in the direction along the track, as can be seen from middle plot of Fig.2.

According to the invention the object is achieved with a method as defined in claim 1 or 4, and a device as claimed in claim 8 or 9.

The method according to the invention relies on the use of cascaded adaptive filtering steps applied to the readout data signal.

A first adaptive phase-filtering step is dedicated to the compensation of the non-linear phase distortion caused by the tangential tilt. This first filtering step is made adaptive to a measure of the tangential tilt, for example in using a look-up table step establishing a link between a value of the tangential tilt and a set of coefficients defining a filter (also called "group delay equalizer") used in this first filtering step.

A second adaptive amplitude-filtering step is dedicated to the compensation of amplitude channel frequency response distortions caused by tangential tilt as well as other channel distortions such as the defocus and the spherical aberration or other types of distortions which influence mainly only the amplitude frequency response of the channel. This second filtering step is made adaptive to an adaptation signal generated by an adaptation step defining a set of coefficients defining a filter (also called "amplitude equalizer") used in this second filtering step, in minimizing an error between the output data signal and a target data signal, such as a least mean squares (LMS) error-based algorithm or zero-forcing (ZF) adaptation algorithm. In order to increase the stability of the adaptation step and remove any interference with the timing recovery step (i.e. with the sampling rate conversion step), the set of coefficients may either can be forced to be symmetrical, or alternatively a leakage scheme may be applied.

Since the filtering steps are performed asynchronously (i.e. before the timing recovery step), the timing recovery step can benefit from the improved quality signal produced by the proposed adaptive equalizer.

The proposed asynchronous adaptive equalizer can effectively solve the start-up and the stability problems of the existing adaptive equalization schemes.

The structure of the proposed adaptive equalizer is in particular well suited to digital implementation because of the all-pass property of the group delay equalizer and the symmetrical property of the amplitude equalizer.

All these aspects make this method relevant for the channel equalization in very high-density optical disk drives.

In a preferred version, the second adaptive amplitude-filtering step is made to be also adaptive to the tangential tilt.

This solution allows to improve the stability of the proposed fully asynchronous adaptive equalizer and leads to a good compromise between the stability and the performance of the adaptive equalizer.

The invention also relates to a computer program comprising code instructions for implementing the steps of the methods according to the invention.

The invention also relates to an optical disc drive comprising processing means for implementing the steps of the methods according to the invention.

Detailed explanations and other aspects of the invention will be given below.

## BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner :

Fig.1 illustrates a radial tilt and a tangential tilt in an optical data carrier,
Fig.2 illustrates the comatic aberration of an optical spot on an optical data carrier,
Fig.3 depicts a known method of tangential tilt compensation,
Fig.4 depicts a first method according to the invention,
Fig.5 depicts a second method according to the invention,
Fig.6 depicts a third method according to the invention,
Fig.7 depicts a fourth method according to the invention,

Fig.8 depicts the different processing steps performed in a sampling rate data converter comprising a PLL,
Fig.9 illustrates the spherical aberration.

## DETAILED DESCRIPTION OF THE INVENTION

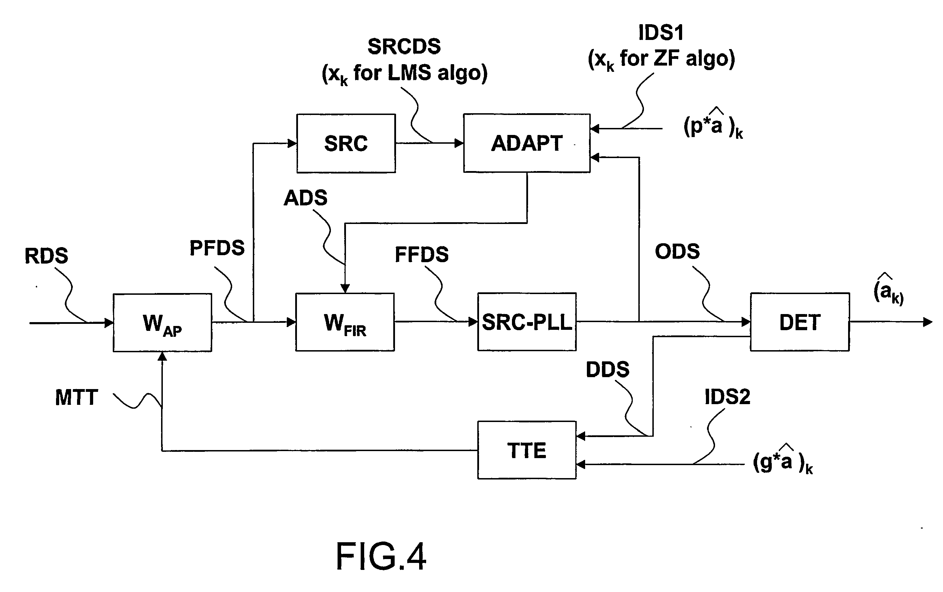

Fig.4 depicts a first method according to the invention of compensating readout channel distortions in an optical storage systems, such as defocus, spherical aberrations, and optical data carrier tangential tilt, said optical data carrier being intended to store a primary data signal.

This method comprises an adaptive phase-filtering step ($W_{AP}$) applied to a readout data signal (RDS) derived from said primary data signal, for generating a phase-filtered data signal (PFDS) from a measure (MTT) of the optical data carrier tangential tilt.

This method comprises an adaptive amplitude-filtering step ($W_{FIR}$), adaptive to an adaptation data signal (ADS) and applied to said phase-filtered data signal (PFDS) for generating a fully-filtered data signal (FFDS).

This method comprises a first sampling rate conversion step (SRC-PLL) for converting the sampling rate of said fully-filtered data signal (FFDS) for generating an output data signal (ODS).

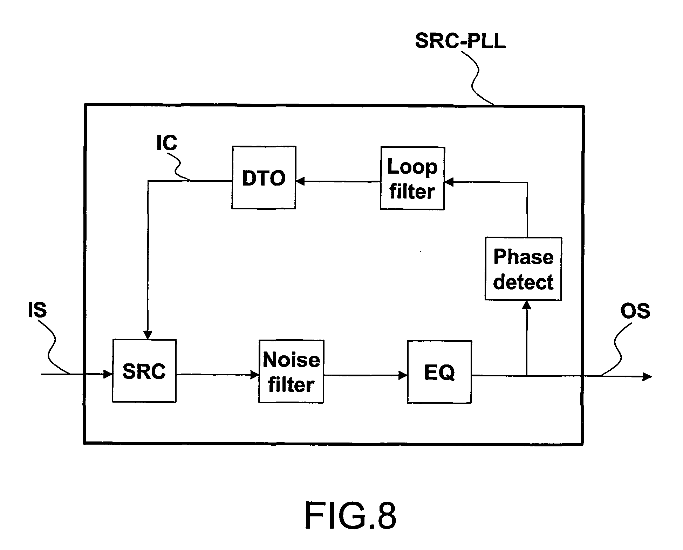

The sampling rate conversion step (SRC-PLL), also called timing recovery step, aims at re-sampling (i.e. interpolating) the incoming bit-asynchronous stream of readout samples into a stream of samples synchronized with the data bits stored on the optical data carrier. The re-sampling is performed from an internal clock derived, for example, from the incoming bit-asynchronous stream itself by means of a PLL (Phase Locked Loop). To this end, the SRC-PLL step comprises the set of processing steps depicted in Fig.8. The sampling rate of the incoming bit-asynchronous stream IS is converted by a re-sampling step SRC from the internal clock IC generated by the discrete-time oscillator step (DTO). After rate conversion, the signal is successively fed through a noise filter and an equalizer EQ designed for filtering the incoming noise-filtered data signal in view of shaping the readout channel response and shaping the noise component in order to match both of them better to the requirements of the bit detector (DET), for generating the output re-sampled signal OS. The PLL comprises in series a phase detection step for detecting the phase of the output re-sampled signal OS, a loop filtering step for ensuring the stability of the loop, and said discrete-time oscillator step (DTO).

Since the adaptive phase-filtering step ($W_{AP}$) and the adaptive amplitude-filtering step ($W_{FIR}$) are performed before the sampling rate conversion step (SRC-PLL), this method is made fully bit-asynchronously so as to improve the signal quality at the input of the timing recovery subsystem (SRC-PLL) and consequently improve the quality of the timing recovery step.

This method comprises a second sampling rate conversion step (SRC) for converting the sampling rate of said phase-filtered data signal (PFDS) so as to generate a sampling rate converted data signal (SRCDS) being bit-synchronous. The second conversion step SRC is a "slave" of the main conversion step (SRC-PLL) since its sampling frequency and phase are derived from those computed by the loop comprised in the SRC-PLL step. The purpose of the second SRC step is to synchronize the SRCDS data signal and the IDS1 data signal.

Let $W_{AP}^{\alpha}\left(e^{j\omega}\right)$ denote the Fourier transform representation of the group delay equalizer $W_{AP}$,

Let $W_{FIR}^{\alpha}\left(e^{j\omega}\right)$ denote the Fourier transform representation of the amplitude equalizer $W_{FIR}$,

Let $a_k$ denote data to be retrieved and forming the primary data signal stored on the optical data carrier,

Let $\hat{a}_k$ denote the output estimated data of $a_k$ generated at the output of signal processing steps according to the invention, $\hat{a}_k$ corresponding to the output of the bit decision step DET in Figs.4 to 6.

Let $\alpha_k$ denote the value of the measured tangential tilt value MTT,

Let $\hat{a}_k$ denote the estimated value of $a_k$ generated by the tangential tilt estimating step TTE,

Let $h_k^{\alpha}$ denote the channel impulse response of the readout channel distorted by the tangential tilt, and corresponding to the given channel response (not necessarily optimally equalized even when $a_k = 0$).

Let $g_k$ denote the partial derivative of $h_k^{\alpha}$ with respect to the tangential tilt, evaluated at tangential tilt $a_k = 0$,

Let $p_k$ denote the target partial response of the readout channel, which can be expressed as a simple FIR (Finite Impulse Response) filter. This target partial response is chosen such that performance of the employed bit detector step DET is optimized.

Let $x_k$ denote either the data signal SRCDS generated by the sampling rate converter step SRC if LMS adaptation is used, or the data signal IDS 1 if ZF adaptation is employed.

This method comprises an adaptation step (ADAPT) for generating said adaptation data signal (ADS), from :

- said output data signal (ODS),
- said bit-synchronous sampling rate converted data signal (SRCDS) : this bit-synchronous signal is used as a clock signal.
- an information data signal (IDS1): this signal is derived from a convolution between $p_k$ and $\hat{a}_k$.

Two major types of adaptive schemes can be considered:

- the so-called zero-forcing (ZF) : the error signal (the difference between ODS and IDS1 data signals) is correlated with the IDS data signal. This algorithm aims at forcing the error signal to zero.
- the so-called least mean square (LMS) : the error signal (the difference between ODS and IDS1 data signals) is correlated with the SRCDS data signal. This algorithm aims at minimizing the mean squared error of the error signal.

The filter coefficients of the group delay equalizer $W_{AP}$ are pre-computed for different tilt angles, for example stored in a lookup table, and updated during the drive operation based upon the estimated tangential tilt angle from the measure of the tangential tilt. The correspondence between coefficients and the tilt value is established analytically or experimentally.

The filter coefficients $w_j^{FIR}(k)$ of the amplitude equalizer $W_{FIR}$ are adjusted such that no interference with the PLL loop of the SCR-PLL step occurs. These filter coefficients are set via the adaptation data signal ADS. To this end, filter coefficients verify the following symmetry relation:

$$w_j^{FIR}(k) = w_{N-j+1}^{FIR}(k) \text{ with } j = 1 \dots N \tag{1}$$

where N denotes the odd number of coefficients defining the filter.
The amplitude equalizer $W_{FIR}$ can thus adaptively compensate the amplitude distortion of the optical readout channel while keeping its phase characteristics linear.

The filter coefficients $w_j^{FIR}(k)$ of the amplitude equalizer $W_{FIR}$ are defined by the adaptation step ADAPT which consists of a constrained LMS algorithm verifying the following equations:

$$w_j^{FIR}(k+1) = w_j^{FIR}(k) + \mu \Delta_j \text{ with } j \le \frac{N}{2} \tag{2}$$

where

$$\Delta_j = e(k) x(k-j) \tag{3}$$

and

$$e(k) = \sum_{j=1}^{\frac{N}{2}} w_j^{FIR}(k) \big( x(k-j) + x(k-N+1-j) \big) + w_{\frac{N}{2}}^{FIR}(k) x(k-\frac{N}{2}) - \sum_i p(i) \hat{a}(k-i) \tag{4}$$

The coefficient $\mu$ denotes an adaptation gain defining the stability and the speed convergence of the filter coefficients. An increased adaptation constant $\mu$ leads to a faster convergence.

It should be noted on the symmetry condition in (1) that the processing can be performed only on N/2 coefficients.

The error generation in the adaptation step ADAPT is done in the bit-synchronous domain, while the filter coefficients update is done in the bit-asynchronous domain.

If the frequency in the bit-asynchronous domain differs too much from that in the bit-synchronous domain, an additional interpolator (not shown) may be required to circumvent the malfunction of the adaptive equalizer. Furthermore, because of the over-sampling in the bit-asynchronous domain, some out-of-band components (i.e. spectral components of the signal whose frequency is higher than the optical readout channel cut-off frequency) beyond the optical channel cut-off frequency may be introduced in the adaptation step ADAPT.

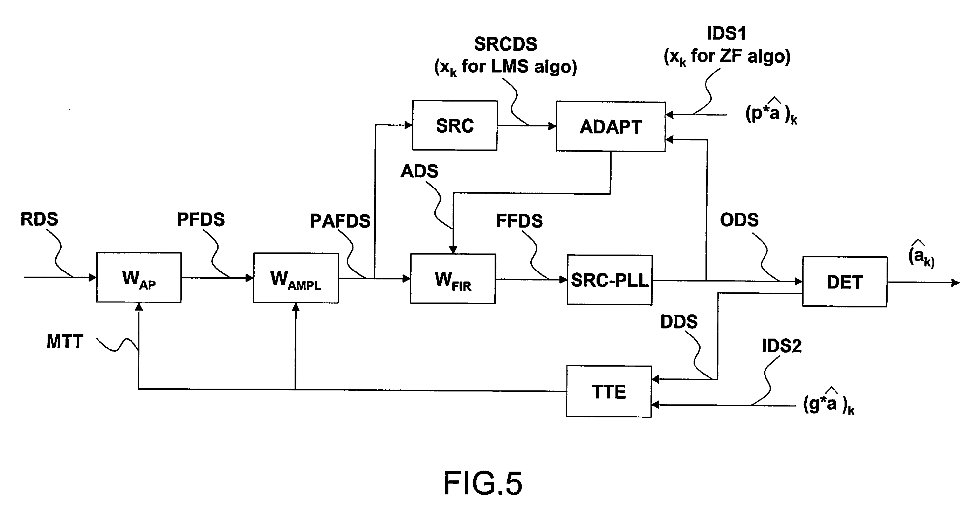

Fig. 5 depicts a second method according to the invention of compensating readout channel distortions in an optical storage systems, such as defocus, spherical aberrations, and optical data carrier tangential tilt, said optical data carrier being intended to store a primary data signal.

This method differs from that of Fig.4 in that an adaptive amplitude-filtering step (W$_{AMPL}$) is inserted between the filtering steps W$_{AP}$ and W$_{FIR}$, said filtering step W$_{AMPL}$ using a filter having coefficients that are adaptive to the measure (MTT) of the optical data carrier tangential tilt. Amplitude frequency response distortions caused by tangential tilt are thus compensated. The filtering step (W$_{AMPL}$) receives the phase-filtered data signal PFDS and generates a phase-and-amplitude filtered data signal PAFDS used as an input signal for the filtering step W$_{FIR}$.

The filter coefficients of filtering step (W$_{AMPL}$) should be adjusted on the basis of the MTT signal such that the amplitude frequency channel response distortions caused by tangential tilt are compensated.

This improved scheme allows to improve the robustness of the distortions compensation and the ramp-up behavior since the adaptation speed of the filtering step W$_{AMPL}$ is faster than that of the adaptation step ADAPT.

Alternatively, the sampling rate conversion step SRC could receive the phase-filtered data signal PFDS generated by the W$_{AP}$ filtering step as input signal.

In this scheme, the coefficient update algorithm is given by the following relation :

$$w_j^{FIR}(k+1) \ = w_j^{FIR}(k) \ + \ \mu \ \Delta_j^{LMS} + \gamma \left( w_j^{\hat{\alpha}} \ - \ w_j^{FIR}(k) \right) \ \text{with} \ \ j \ \leq \frac{N}{2} \tag{5}$$

It can be shown that the average final coefficient value is thus given by the following relation:

$$\lim_{k \to \infty} E \left\{ w_j^{FIR}(k) \right\} \ = \frac{\mu \, \sigma_X^2 \, w_j^{opt} + \gamma \, w_j^{\hat{\alpha}}}{\mu \, \sigma_X^2 + \gamma} \tag{6}$$

where $\sigma_X^2 = E\left\{x_k^2\right\}$ is the variance of the amplitude equalizer input signal, and $w_j^{opt}$ is the optimal coefficient value in the sense of least mean square.

Filter coefficients $w_j^{\hat{\alpha}}$ correspond to the W$_{AMPL}$ filter coefficients. The adaptive filter $W_{FIR}^\alpha(e^{j\omega})$ coefficients in (5) may either remain symmetrical as in (2) or be made asymmetric. If symmetrical, the stability of the adaptation is improved. If asymmetrical, the filtering step W$_{AWPL}$ may be used not only for compensating amplitude distortions, but also for compensating residual phase distortions which may still remain after the tangential tilt correction. This introduced stabilization leakage scheme ensures that the interference with the SRC-PLL loop is significantly decreased, so that no stability or convergence problems occur.

Tuning of the leakage constant γ can provide a trade-off between loop stability and adaptation flexibility, in tackling the residual phase distortions. Large values of γ make the loop very stable, whereas small values of γ allow more flexibility.

To avoid some possible interference between the adaptation step ADAPT and the TTE step, the adaptation gain for the TTE may be chosen higher than that for the LMS-adaptation, or an adaptation constraint may be imposed on the W$_{FIR}$ filter, for example, in limiting the variation range of the W$_{FIR}$ filter coefficient.

As for the group delay equalizer $W_{AP}^\alpha(e^{j\omega})$, an all-pass filter with N coefficients is mostly used. Thus, the Z-transfer function of filter W$_{AP}$ can be expressed as follows :

$$W_{AP}^\alpha(z) = \frac{Y_{AP}(z)}{U_{AP}(z)} = \frac{a_N^\alpha + a_{N-1}^\alpha z^{-1} + \cdots + z^{-N}}{1 + a_1^\alpha z^{-1} + \cdots + a_N^\alpha z^{-N}} \tag{7}$$

The corresponding difference equation can be expressed by :

$$y_{AP}(k) = u_{AP}(k-N) - a_1^\alpha \left( y_{AP}(k-1) - u_{AP}(k-N+1) \right) - \cdots - a_N^\alpha \left( y_{AP}(k-N) - u_{AP}(k) \right) \qquad (8)$$

which implies that the number of the filter coefficient multipliers is only N instead of 2N. Also, as for the symmetrical FIR filter with M coefficients, it can be easily seen from the symmetry condition of the filter that the number of the filter coefficient multipliers is M/2 instead of M.

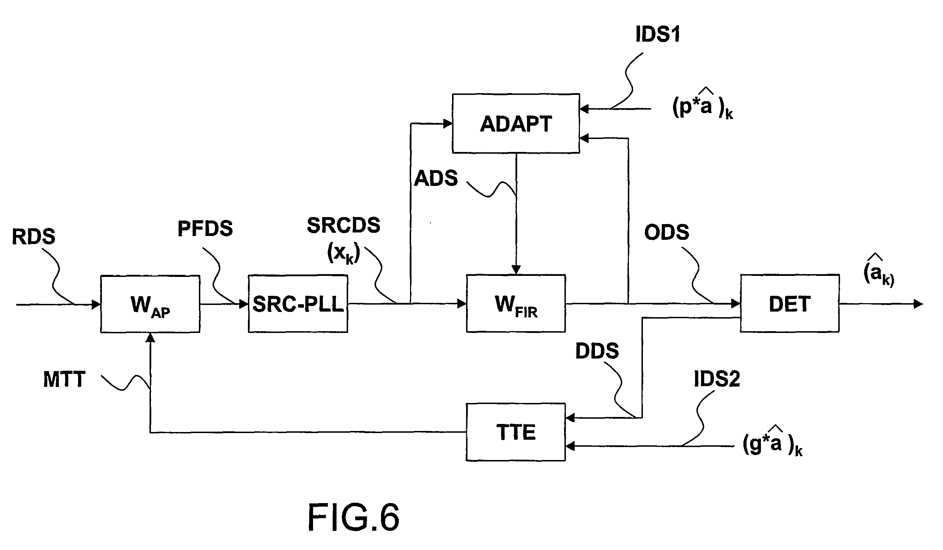

Fig.6 depicts a third method according to the invention of compensating readout channel distortions in an optical storage systems, such as defocus, spherical aberrations, and optical data carrier tangential tilt, said optical data carrier being intended to store a primary data signal.

This method comprises an adaptive phase-filtering step ($W_{AP}$) applied to a readout data signal (RDS) derived from said primary data signal for generating a phase-filtered data signal (PFDS) from a measure (MTT) of the optical data carrier tangential tilt.

The filter coefficients of the group delay equalizer $W_{AP}$ and of the filter $W_{AMPL}$ are pre-computed for different tilt angles, for example stored in a lookup table, and updated during the drive operation on the basis of the estimated tangential tilt. The correspondence between the coefficients and the tilt value is established analytically or experimentally.

This method comprises a sampling rate conversion step (SRC-PLL) for converting the sampling rate of said phase-filtered data signal (PAFDS) so as to generate a sampling rate converted data signal (SRCDS). This processing step serves to perform the same function as depicted for the first method according to the invention in Fig. 4.

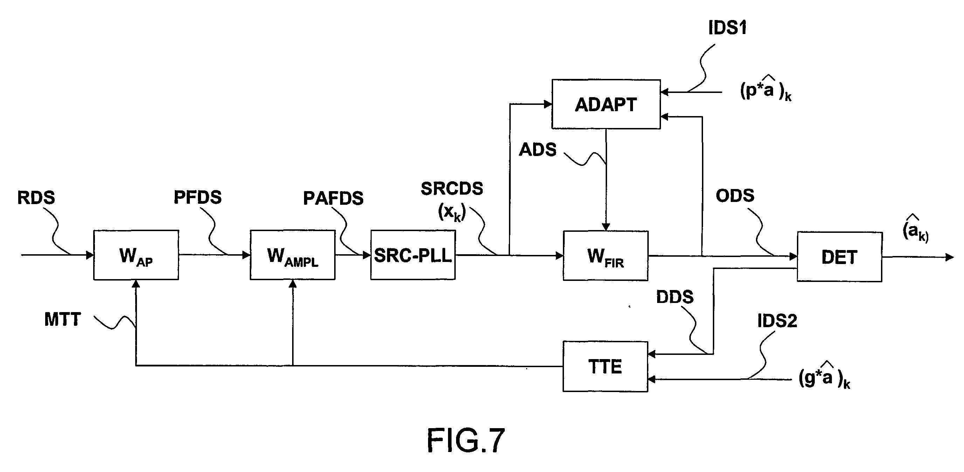

In a preferred fourth method depicted in Fig.7, an adaptive amplitude-filtering step ($W_{AMPL}$) is inserted between the filtering step $W_{AP}$ and the sampling rate converter step SRC-PLL, said filtering step $W_{AMPL}$ using a filter having coefficients adaptive to the measure (MTT) of the optical data carrier tangential tilt. Amplitude frequency response distortions caused by tangential tilt are thus compensated. The filtering step ($W_{AMPL}$) receives the phase-filtered data signal PFDS and generates a phase-and-amplitude filtered data signal PAFDS used as an input signal for the sampling rate converter step SRC-PLL.

This method comprises an adaptive filtering step ($W_{FIR}$), adaptive to an adaptation data signal (ADS), applied to said sampling rate converted data signal (SRCDS), for generating an output data signal (ODS). The filtering step $W_{FIR}$ may comprise either a symmetrical or an asymmetric filter and may correct both amplitude and phase distortions if it is placed in a fully decoupled way with respect to the SRC-PLL loop.

Since the adaptive filtering steps $W_{AP}$ and $W_{AMPL}$ are performed bit-asynchronously before the sampling rate conversion step (SRC-PLL), and the adaptive filtering step ($W_{FIR}$) is performed bit-synchronously after the sampling rate conversion step (SRC-PLL), this method is a mixed asynchronous/synchronous solution.

This method comprises an adaptation step (ADAPT) for generating said adaptation data signal (ADS), from :

- said output data signal (ODS),
- said bit-synchronous sampling rate converted data signal (SRCDS) : this bit-synchronous signal is used as a clock signal.
- an information data signal (IDS1): this signal is derived from a convolution between $p_k$ and $\hat{a}_k$.

In each method according to the invention, a measure MTT of the tangential tilt is required. Such a measure may be obtained optically as described in the patent application US 6,525,332 disclosing a method of estimating the tangential tilt of an optical data carrier.

However, signal-processing-based methods are preferred. For example, a tangential tilt measure may be derived from a cross-correlation between an information data signal IDS2 and a decision data signal DDS. The information data signal IDS2 derives from a convolution between $g_k$ and $\hat{a}_k$, while the decision data signal DDS derives from bit decisions generated by the detection step DET.

The bit detection step (DET) aims at generating bit decisions, for example in forcing the incoming stream ODS to 0 or 1 according to thresholds in the case of two-level signals, or in using a maximum-likelihood sequence detection if a Viterbi-type bit detector is used. The DET step is designed to match the nominal transmission channel, i.e. a data channel in which the effects of tangential tilt, defocus, and spherical aberrations have been compensated.

The various methods according to the invention may be implemented by means of a computer program comprising code instructions for implementing the individual processing steps described above, and executed by a signal processor.

In an optical data carrier reader and/or writer, such various methods may be implemented in an optical disc drive (e.g. an electronic module or as an integrated circuit) for compensating the distortions of an optical data carrier intended to store a primary data signal, said device comprising processing means, such as signal processors executing the instructions of a computer program, for implementing the steps of the methods according to the invention.

This optical disc drive may advantageously be implemented in an apparatus for reading and/or writing an optical disc.

The verb "comprise" does not exclude the presence of other elements than those listed in the claims.

**Claims**

1. Method of compensating readout channel distortions in optical data carrier storage systems intended to store a primary data signal, said method comprising :

   - an adaptive phase-filtering step ($W_{AP}$) applied to a readout data signal (RDS) derived from said primary data signal, for generating a phase-filtered data signal (PFDS) in dependence of a measure (MTT) of the optical data carrier tangential tilt,
   - a first adaptive amplitude-filtering step ($W_{FIR}$), adaptive to an adaptation data signal (ADS) and applied to said phase-filtered data signal (PFDS), for generating a fully-filtered data signal (FFDS),
   - a first sampling rate conversion step (SRC-PLL) for converting the sampling rate of said fully-filtered data signal (FFDS) so as to generate an output data signal (ODS),
   - a second sampling rate conversion step (SRC) for converting the sampling rate of said phase-filtered data signal (PFDS) so as to generate a sampling rate converted data signal (SRCDS),
   - an adaptation step (ADAPT) for generating said adaptation data signal (ADS) from said output data signal (ODS), from said sampling rate converted data signal (SRCDS), and from an information data signal (IDS1).

2. Method as claimed in claim 1, comprising a second adaptive amplitude-filtering step ($W_{AMPL}$) inserted between said adaptive phase-filtering step ($W_{AP}$) and said first adaptive amplitude-filtering step ($W_{FIR}$), said second filtering step being adaptive to said measure (MTT) of the optical data carrier tangential tilt.

3. Method as claimed in claim 1 or 2, wherein said information data signal (IDS1) is derived from a convolution step between the target partial response of the readout channel ($p_k$) and the output estimated data ($\hat{a}_k$).

4. Method of compensating readout channel distortions in optical data carrier storage systems intended to store a primary data signal, said method comprising :

   - an adaptive phase-filtering step ($W_{AP}$) applied to a readout data signal (RDS) derived from said primary data signal, for generating a phase-filtered data signal (PFDS) in dependence of a measure (MTT) of the optical data carrier tangential tilt,
   - a sampling rate conversion step (SRC-PLL) for converting the sampling rate of said phase-filtered data signal (PFDS) so as to generate a sampling rate converted data signal (SRCDS),
   - an adaptive amplitude-filtering step ($W_{FIR}$), adaptive to an adaptation data signal (ADS) and applied to said sampling rate converted data signal (SRCDS), for generating an output data signal (ODS),
   - an adaptation step (ADAPT) for generating said adaptation data signal (ADS) from said output data signal (ODS), from said sampling rate converted data signal (SRCDS), and from an information data signal (IDS1).

5. Method as claimed in claim 4, comprising a second adaptive amplitude-filtering step ($W_{AMPL}$) inserted between said adaptive phase-filtering step ($W_{AP}$) and said first adaptive amplitude-filtering step ($W_{FIR}$), said second filtering step being adaptive to said measure (MTT) of the optical data carrier tangential tilt.

6. Method as claimed in claim 4 or 5, wherein said information data signal (IDS1) is derived from a convolution step between the target partial response of the readout channel ($p_k$) and the output estimated data ($\hat{a}_k$).

7. A computer program comprising code instructions for implementing the steps of the method as claimed in claim 1, 2, 3, 4, 5 or 6.

8. Optical disc drive for compensating readout channel distortions in optical data carrier storage systems intended to store a primary data signal, said optical disc drive comprising :

   - adaptive phase-filtering means ($W_{AP}$) applied to a readout data signal (RDS) derived from said primary data signal, for generating a phase-filtered data signal (PFDS) in dependence of a measure (MTT) of the optical data carrier tangential tilt,

- first adaptive amplitude-filtering means ($W_{FIR}$), adaptive to an adaptation data signal (ADS) and applied to said phase-filtered data signal (PFDS), for generating an fully-filtered data signal (FFDS),
- first sampling rate conversion means (SRC-PLL) for converting the sampling rate of said fully-filtered data signal (FFDS) so as to generate an output data signal (ODS),
- second sampling rate conversion means (SRC) for converting the sampling rate of said phase-filtered data signal (PFDS) so as to generate a sampling rate converted data signal (SRCDS),
- adaptation means (ADAPT) for generating said adaptation data signal (ADS) from said output data signal (ODS), from said sampling rate converted data signal (SRCDS), and from an information data signal (IDS1).

9. Optical disc drive for compensating readout channel distortions in optical data carrier storage systems intended to store a primary data signal, said optical disc drive comprising :

- adaptive phase-filtering means ($W_{AP}$) applied to a readout data signal (RDS) derived from said primary data signal, for generating a phase-filtered data signal (PFDS) in dependence of a measure (MTT) of the optical data carrier tangential tilt,
- sampling rate conversion means (SRC-PLL) for converting the sampling rate of said phase-filtered data signal (PFDS), so as to generate a sampling rate converted data signal (SRCDS),
- adaptive amplitude-filtering means ($W_{FIR}$), adaptive to an adaptation data signal (ADS) and applied to said sampling rate converted data signal (SRCDS), for generating an output data signal (ODS),
- adaptation means (ADAPT) for generating said adaptation data signal (ADS), from said output data signal (ODS), from said sampling rate converted data signal (SRCDS), and from an information data signal (IDS1).

10. An apparatus for reading and/or writing an optical data carrier comprising an optical disc drive as claimed in claim 8 or 9.

**Patentansprüche**

1. Verfahren zum Kompensieren von Auslesekanal-Verzerrungen in optischen Datenträger-Speichersystemen, die zur Speicherung eines Primärdatensignals vorgesehen sind, wobei das Verfahren umfasst:

- einen adaptiven Phasen-Filterungsschritt ($W_{AP}$), der auf ein Auslesedatensignal (RDS) angewendet wird, das aus dem Primärdatensignal abgeleitet ist, um ein phasengefiltertes Datensignal (PFDS) in Abhängigkeit von einem Maß (MTT) der tangentialen Schräglage des optischen Datenträgers zu erzeugen,
- einen ersten adaptiven Amplituden-Filterungsschritt ($W_{FIR}$), der adaptiv zu einem Anpassungsdatensignal (ADS) ist und auf das phasengefilterte Datensignal (PFDS) angewendet wird, um ein vollständig gefiltertes Datensignal (FFDS) zu erzeugen,
- einen ersten Abtastraten-Umwandlungsschritt (SRC-PLL) für das Umwandeln der Abtastrate des vollständig gefilterten Datensignals (FFDS), um so ein Ausgangsdatensignal (ODS) zu erzeugen,
- einen zweiten Abtastraten-Umwandlungsschritt (SRC) für das Umwandeln der Abtastrate des phasengefilterten Datensignals (PFDS), um so ein abtastratengewandeltes Datensignal (SRCDS) zu erzeugen,
- einen Anpassungsschritt (ADAPT) für das Erzeugen des Anpassungsdatensignals (ADS) aus dem Ausgangsdatensignal (ODS), aus dem abtastratengewandelten Datensignal (SRCDS) und aus einem Informationsdatensignal (IDS1).

2. Verfahren nach Anspruch 1, das einen zweiten adaptiven Amplituden-Filterungsschritt ($W_{AMPL}$) umfasst, der zwischen den adaptiven Phasen-Filterungsschritt ($W_{AP}$) und den ersten adaptiven Amplituden-Filterungsschritt ($W_{FIR}$) eingefügt ist, wobei der zweite Filterungsschritt adaptiv zu dem Maß (MTT) der tangentialen Schräglage des optischen Datenträgers ist.

3. Verfahren nach Anspruch 1 oder 2, wobei das Informationsdatensignal (IDS1) aus einem Faltungsschritt zwischen der Vorgabe-Teilantwort des Auslesekanals ($p_k$) und den ausgegebenen abgeschätzten Daten ($\hat{a}_k$) abgeleitet ist.

4. Verfahren zum Kompensieren von Auslesekanal-Verzerrungen in optischen Datenträger-Speichersystemen, die zur Speicherung eines Primärdatensignals vorgesehen sind, wobei das Verfahren umfasst:

- einen adaptiven Phasen-Filterungsschritt ($W_{AP}$), der auf ein Auslesedatensignal (RDS) angewendet wird, das aus dem Primärdatensignal abgeleitet ist, um ein phasengefilterten Datensignal (PFDS) in Abhängigkeit von einem Maß (MTT) der tangentialen Schräglage des optischen Datenträgers zu erzeugen,
- einen Abtastraten-Umwandlungsschritt (SRC-PLL) für das Umwandeln der Abtastrate des phasengefilterten Datensignals (PFDS), um ein abtastratengewandeltes Datensignal (SRCDS) zu erzeugen,
- einen adaptiven Amplituden-Filterungsschritt ($W_{FIR}$), der adaptiv zu einem Anpassungsdatensignal (ADS) ist und auf das abtastratengewandelte Datensignal (SRCDS) angewendet wird, um ein Ausgangsdatensignals (ODS) zu erzeugen,
- einen Anpassungsschritt (ADAPT) für das Erzeugen des Anpassungsdatensignals (ADS) aus dem Ausgangsdatensignal (ODS), aus dem abtastratengewandelten Datensignal (SRCDS) und aus einem Informationsdatensignal (IDS1).

5. Verfahren nach Anspruch 4, das einen zweiten adaptiven Amplituden-Filterungsschritt ($W_{AMPL}$) umfasst, der zwischen den adaptiven Phasen-Filterungsschritt ($W_{AP}$) und den ersten adaptiven Amplituden-Filterungsschritt ($W_{FIR}$) eingefügt ist, wobei der zweite Filterungsschritt adaptiv zu dem Maß (MTT) der tangentialen Schräglage des optischen Datenträgers ist.

6. Verfahren nach Anspruch 4 oder 5, wobei das Informationsdatensignal (IDS1) aus einem Faltungsschritt zwischen der Vorgabe-Teilantwort des Auslesekanals ($p_k$) und den ausgegebenen abgeschätzten Daten ($\hat{a}_k$) abgeleitet ist.

7. Rechnerprogramm, das Programmbefehle für das Implementieren der Schritte des Verfahrens nach den Ansprüchen 1, 2, 3, 4, 5 oder 6 umfasst.

8. Optisches Plattenlaufwerk für das Kompensieren von Auslesekanal-Verzerrungen in optischen Datenträger-Speichersystemen, die zur Speicherung eines Primärdatensignals vorgesehen sind, wobei das optische Plattenlaufwerk umfasst:

- adaptive Phasen-Filterungsmittel ($W_{AP}$), die auf ein Auslesedatensignal (RDS) angewendet werden, das aus dem Primärdatensignal abgeleitet ist, um ein phasengefiltertes Datensignal (PFDS) in Abhängigkeit von einem Maß (MTT) der tangentialen Schräglage des optischen Datenträgers zu erzeugen,
- erste adaptive Amplituden-Filterungsmittel ($W_{FIR}$), die adaptiv zu einem Anpassungsdatensignal (ADS) sind und auf das phasengefilterte Datensignal (PFDS) angewendet werden, um ein vollständig gefiltertes Datensignal (FFDS) zu erzeugen,
- erste Abtastraten-Umwandlungsmittel (SRC-PLL) für das Umwandeln der Abtastrate des vollständig gefilterten Datensignals (FFDS), um so ein Ausgangsdatensignal (ODS) zu erzeugen,
- zweite Abtastraten-Umwandlungsmittel (SRC) für das Umwandeln der Abtastrate des phasengefilterten Datensignals (PFDS), um so ein abtastratengewandeltes Datensignal (SRCDS) zu erzeugen,
- Anpassungsmittel (ADAPT) für das Erzeugen des Anpassungsdatensignals (ADS) aus dem Ausgangsdatensignal (ODS), aus dem abtastratengewandelten Datensignal (SRCDS) und aus einem Informationsdatensignal (IDS1).

9. Optisches Plattenlaufwerk für das Kompensieren von Auslesekanal-Verzerrungen in optischen Datenträger-Speichersystemen, die zur Speicherung eines Primärdatensignals vorgesehen sind, wobei das optische Plattenlaufwerk umfasst:

- adaptive Phasen-Filterungsmittel ($W_{AP}$), die auf ein Auslesedatensignal (RDS) angewendet werden, das aus dem Primärdatensignal abgeleitet ist, um ein phasengefiltertes Datensignal (PFDS) in Abhängigkeit von einem Maß (MTT) der tangentialen Schräglage des optischen Datenträgers zu erzeugen,
- Abtastraten-Umwandlungsmittel (SRC-PLL) für das Umwandeln der Abtastrate des phasengefilterten Datensignals (PFDS), um ein abtastratengewandeltes Datensignal (SRCDS) zu erzeugen,
- adaptive Amplituden-Filterungsmittel ($W_{FIR}$), die adaptiv zu einem Anpassungsdatensignal (ADS) sind und auf das abtastratengewandelte Datensignal (SRCDS) angewendet werden, um ein Ausgangsdatensignals (ODS) zu erzeugen,
- Anpassungsmittel (ADAPT) für das Erzeugen des Anpassungsdatensignals (ADS) aus dem Ausgangsdatensignal (ODS), aus dem abtastratengewandelten Datensignal (SRCDS) und aus einem Informationsdatensignal (IDS1).

10. Vorrichtung zum Lesen und/oder Beschreiben eines optischen Datenträgers, der ein optisches Plattenlaufwerk nach Anspruch 8 oder 9 umfasst.

**Revendications**

1.  Procédé de compensation de distorsions d'un canal de lecture dans des systèmes de stockage optique de données destinés à stocker un signal de données primaire, ledit procédé comprenant :

    - une étape adaptative de filtrage de phase ($W_{AP}$) appliquée à un signal de données de lecture (RDS) obtenu à partir dudit signal de données primaire, pour générer un signal de données filtré en phase (PFDS) en fonction d'une mesure (MTT) de l'inclinaison tangentielle du support optique de donnés,
    - une première étape adaptative de filtrage d'amplitude ($W_{FIR}$), adaptative à un signal de données d'adaptation (ADS) et appliquée audit signal de données filtré en phase (PFDS), pour générer un signal de données entièrement filtré (FFDS),
    - une première étape de conversion de fréquence d'échantillonnage (SRC-PLL) pour convertir la fréquence d'échantillonnage dudit signal de données entièrement filtré (FFDS) afin de générer un signal de données de sortie (ODS),
    - une deuxième étape de conversion de fréquence d'échantillonnage (SRC) pour convertir la fréquence d'échantillonnage dudit signal de données filtré en phase (PFDS) afin de générer un signal de données à fréquence d'échantillonnage convertie (SRCDS),
    - une étape d'adaptation (ADAPT) pour générer ledit signal de données d'adaptation (ADS) à partir dudit signal de données de sortie (ODS), à partir dudit signal de données à fréquence d'échantillonnage convertie (SRCDS) et à partir d'un signal de données d'informations (IDS1).

2.  Procédé selon la revendication 1, comprenant une deuxième étape adaptative de filtrage d'amplitude ($W_{AMPL}$) insérée entre ladite étape adaptative de filtrage de phase ($W_{AP}$) et ladite première étape adaptative de filtrage d'amplitude ($W_{FIR}$), ladite deuxième étape de filtrage étant adaptative à ladite mesure (MTT) de l'inclinaison tangentielle du support optique de données.

3.  Procédé selon la revendication 1 ou 2, **caractérisé en ce que** ledit signal de données d'informations (IDS1) est obtenu à partir d'une étape de convolution entre la réponse partielle cible du canal de lecture ($p_k$) et les données de sortie estimées ($\hat{a}_k$).

4.  Procédé de compensation de distorsions du canal de lecture dans des systèmes de stockage à support optique de données, destinés à stocker un signal de données primaire, ledit procédé comprenant :

    - une étape adaptative de filtrage de phase ($W_{AP}$) appliquée à un signal de données de lecture (RDS) obtenu à partir dudit signal de données primaire, pour générer un signal de données filtré en phase (PFDS) en fonction d'une mesure (MTT) de l'inclinaison tangentielle du support optique de données,
    - une étape de conversion de la fréquence d'échantillonnage (SRC-PLL) pour convertir la fréquence d'échantillonnage dudit signal de données filtré en phase (PFDS) afin de générer un signal de données à fréquence d'échantillonnage convertie (SRCDS),
    - une étape adaptative de filtrage d'amplitude ($W_{FIR}$), adaptative à un signal de données d'adaptation (ADS) et appliquée audit signal de données à fréquence d'échantillonnage convertie (SRCDS), pour générer un signal de données de sortie (ODS),
    - une étape d'adaptation (ADAPT) pour générer ledit signal de données d'adaptation (ADS) à partir dudit signal de données de sortie (ODS), à partir dudit signal de données à fréquence d'échantillonnage convertie (SRCDS) et à partir d'un signal de données d'informations (IDS1).

5.  Procédé selon la revendication 4, comprenant une deuxième étape adaptative de filtrage d'amplitude ($W_{AMPL}$) insérée entre ladite étape adaptative de filtrage de phase ($W_{AP}$) et ladite première étape adaptative de filtrage d'amplitude ($W_{FIR}$), ladite deuxième étape de filtrage étant adaptative à ladite mesure (MTT) de l'inclinaison tangentielle du support optique de données.

6.  Procédé selon la revendication 4 ou 5, **caractérisé en ce que** ledit signal de données d'informations (IDS1) est obtenu à partir d'une étape de convolution entre la réponse partielle cible du canal de lecture ($p_k$) et les données estimées de sortie ($\hat{a}_k$).

7.  Programme informatique comprenant des instructions codées pour mettre en oeuvre les étapes du procédé selon les revendications 1, 2, 3, 4, 5 ou 6.

8. Lecteur de disque optique pour compenser les distorsions du canal de lecture dans des systèmes de stockage à support optique de données destinés à stocker un signal de données primaire, ledit lecteur de disque optique comprenant :

   - un moyen adaptatif de filtrage de phase ($W_{AP}$) appliqué à un signal de données de lecture (RDS) obtenu à partir dudit signal de données primaire, pour générer un signal de données filtré en phase (PFDS) en fonction d'une mesure (MTT) de l'inclinaison tangentielle du support optique de données,
   - un premier moyen adaptatif de filtrage d'amplitude ($W_{FIR}$), adaptatif à un signal de données d'adaptation (ADS) et appliqué audit signal de données filtré en phase (PFDS), pour générer un signal de données entièrement filtré (FFDS),
   - un premier moyen de conversion de la fréquence d'échantillonnage (SRC-PLL) pour convertir la fréquence d'échantillonnage dudit signal de données entièrement filtré (FFDS) afin de générer un signal de données de sortie (ODS),
   - un deuxième moyen de conversion de la fréquence d'échantillonnage (SRC) pour convertir la fréquence d'échantillonnage dudit signal de données filtré en phase (PFDS) afin de générer un signal de données à fréquence d'échantillonnage convertie (SRCDS),
   - un moyen d'adaptation (ADAPT) pour générer ledit signal de données d'adaptation (ADS) à partir dudit signal de données de sortie (ODS), à partir dudit signal de données à fréquence d'échantillonnage convertie (SRCDS) et à partir d'un signal de données d'informations (IDS1).

9. Lecteur de disque optique pour compenser les distorsions du canal de lecture dans des systèmes de stockage à support optique de données, destinés à stocker un signal de données primaire, ledit lecteur de disque optique comprenant :

   - un moyen adaptatif de filtrage de phase ($W_{AP}$) appliqué à un signal de données de lecture (RDS) obtenu à partir dudit signal de données primaire, pour générer un signal de données filtré en phase (PFDS) en fonction d'une mesure (MTT) de l'inclinaison tangentielle du support optique de données,
   - un premier moyen de conversion de la fréquence d'échantillonnage (SRC-PLL) pour convertir la fréquence d'échantillonnage dudit signal de données filtré en phase (PFDS), afin de générer un signal de données à fréquence d'échantillonnage convertie (SRCDS),
   - un moyen adaptatif de filtrage d'amplitude ($W_{FIR}$), adaptatif à un signal de données d'adaptation (ADS) et appliqué audit signal de données à fréquence d'échantillonnage convertie (SRCDS), pour générer un signal de données de sortie (ODS),
   - un moyen d'adaptation (ADAPT) pour générer ledit signal de données d'adaptation (ADS) à partir dudit signal de données de sortie (ODS), à partir dudit signal de données à fréquence d'échantillonnage convertie (SRCDS) et à partir d'un signal de données d'informations (IDS1).

10. Appareil pour lire et/ou écrire sur un support optique de données comprenant un lecteur de disque optique selon la revendication 8 ou 9.

# FIG.1

**FIG.2**

301

302

303

304

305

306

307

```
F
```

```
LMS
```

-

+

# FIG.3

FIG.4

FIG.5

FIG.6

FIG.7

SRC-PLL

IC

| DTO | ← | Loop filter |

Phase detect

IS

| SRC | → | Noise filter | → | EQ |

OS

FIG.8

FIG.9